# EUROPEAN PATENT APPLICATION

(11) **EP 3 434 757 A1**
(43) Date of publication of application: **30.01.2019**
(21) Application number: 17001306.4
(22) Date of filing: 28.07.2017
(51) Int. Cl.: C11B 1/10, A23L 27/10, A23L 33/105, A23L 33/115, B01D 11/02

(54) **METHODS OF EXTRACTING NUTRITIONALLY VALUABLE OR BIOLOGICALLY ACTIVE COMPONENTS USING ANIMAL PRODUCTS AND EXTRACTS OBTAINED BY THE SAME**

(71) Applicant: Unico-first AG, 9000 St. Gallen (CH); Zürcher Hochschule Für Angewandte Wissenschaften, 8820 Wädenswil (CH)
(72) Inventor: LAUX, Roland, CH-9325 Roggwil (CH); HÜHN, Tilo, 8824 Schönenberg (CH)
(74) Representative: Grünecker Patent- und Rechtsanwälte PartG mbB

(57) **Abstract**

This invention relates to a method for obtaining nutritionally beneficial and/or biologically active components, such as aromatic substances and vitamins, from animal-derived products and to oil-based extracts which can be obtained from this method.

## Description

### FIELD OF INVENTION

This invention relates to a method for obtaining nutritionally valuable components, such as aromatic substances and vitamins, as well as biologically active components, from animal-derived products or by using animal-derived products as extraction agents. In further aspects, the invention relates to extracts which can be obtained from this method and to uses of said extracts.

### BACKGROUND OF THE INVENTION

In the recent years, there has been an increasing need to provide the nutritionally valuable components (e.g. healthy ingredients including vitamins, antioxidants, vitamins and polyphenols; and aromas) and/or biologically active components of fresh food and natural products in high-quality essences with long storage stability.

However, especially in case of animal-derived products (e.g. meat, organs, or dairy products), effective extraction of nutritionally and physiologically valuable components is challenging as they are extremely prone to rapid spoilage. However, as meat, fish and animal-derived foods, such as milk, contains a number of valuable components, including vitamins A, D, E, K, thiamin (vitamin B₁), riboflavin (vitamin B₂), pantothenic acid, folate, niacin (vitamin B3), vitamin B₆ and B₁₂, a method for obtaining valuable substances, wherein the value-defining contents, in particular aromatic substances and vitamins, are obtained in a state as highly concentrated as possible and can be stored for a long time remains desirable.

In general, it is considered to be necessary to process the raw products under water-free conditions as water is the basis of most bacteria and germs which result in a rapid spoiling of food products. Therefore, the attempts to conserve aromas are mostly limited to powders. For example, WO 2012/155889 A1 discloses a method for producing soluble aroma concentrates from animal products, by extraction of the aromas by means of alcohol, and the extraction solution and the alcohol are introduced into a reaction chamber with a protective atmosphere and a temperature below 100°C, wherein the solvent is removed by evaporation and the dried aroma components accumulate in the reaction chamber to yield a dried aroma powder. However, the method employs relatively harsh conditions to remove the organic solvents, which results in substantial losses of heat-sensitive flavors and vitamins.

Another possibility for extracting oil-based aromas from animal-derived products includes the use of gas in the liquid or supercritical state (see EP 3 157 897 A1, for example). However, such methods tend to be complex and require elaborate equipment.

The disadvantages of the prior art described result in the object forming the basis of the present invention to set out a method for obtaining extracts from animal products, wherein the nutritionally beneficial components, in particular aromatic substances and vitamins, are present in a state as highly concentrated as possible and which can be stored for a long time. The method is further intended to be as uncomplicated as possible and as simple to carry out as possible.

### SUMMARY OF THE INVENTION

The present invention solves these objects with the subject matter of the claims as defined herein. The advantages of the present invention will be further explained in detail in the section below and further advantages will become apparent to the skilled artisan upon consideration of the invention disclosure.

In one aspect, the present invention relates to a method for obtaining extracts from natural products, preferably food products, comprising the steps of: a) providing a natural product comprising water, lipids and solids; b) adding an extraction agent; c) grinding the natural product and the extraction agent to form a mash; and d) subjecting the mash to a three-phase separation resulting in an oil phase, a water phase and a solid phase as a refined phase; wherein in the grinding step, the natural product and the extraction agent are ground until the mash has a mean particle size of less than 300 µm, preferably less than 100 µm and particularly preferably less than 20 µm; and wherein at least one of the natural product and the extraction agent comprises an animal product.

In another aspect, the present invention relates to oil-based extracts obtainable by the aforementioned method and uses thereof.

Preferred embodiments of the method and products according to the present invention and other aspects of the present invention are described in the following description and the claims.

### BRIEF DESCRIPTION OF THE DRAWINGS

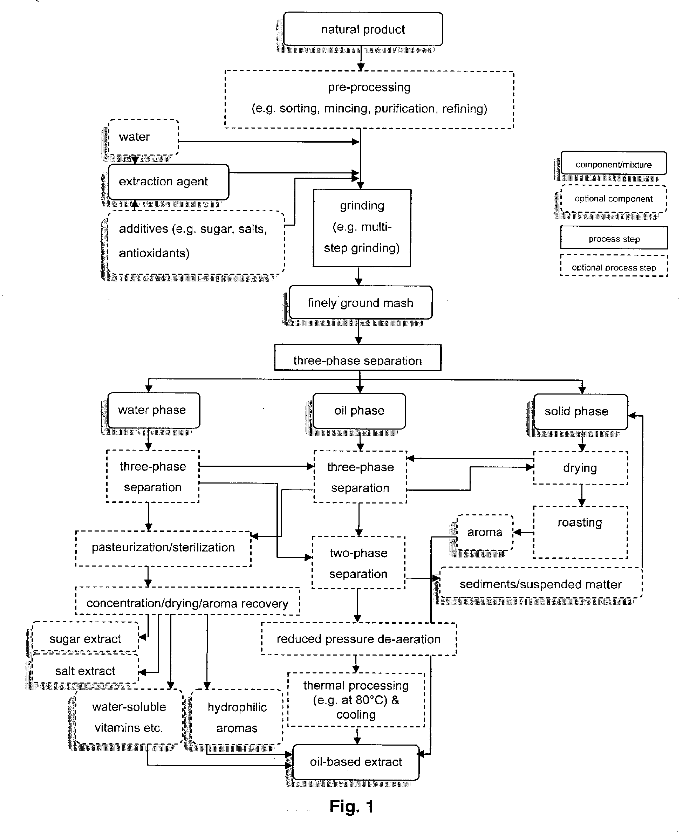

FIG. 1 is a flow chart exemplifying a method for obtaining valuable substances such as aromatic substances and vitamins using animal products.

### DETAILED DESCRIPTION OF THE INVENTION

For a more complete understanding of the present invention, reference is now made to the following description of the illustrative embodiments thereof.

Generally spoken, the present invention relates to a method for obtaining extracts from natural products, comprising the steps of: a) providing a natural product comprising water, lipids and solids; b) adding an extraction agent; c) grinding the natural product and the extraction agent to form a mash; and d) subjecting the mash to a three-phase separation resulting in an oil phase, a water phase and a solid phase as a refined phase; wherein in the grinding step, the natural product and the extraction agent are ground until the mash has a mean particle size of less than 300 µm, preferably less than 100 µm and particularly preferably less than 20 µm; and wherein at least one of the natural product and the extraction agent comprises an animal product.

An exemplary method for obtaining extracts from natural products is illustrated in Fig. 1.

The natural product used in the context of the present invention comprises water, lipids, solids, and substances contained or dissolved therein. The contents of said components are not specifically limited as long as the mash obtained after combination with the extraction agent and the subsequent grinding step enables effective separation into the three phases, i.e. the oil phase, the water phase and the solid phase, preferably in such a manner that at least 15%, preferably at least 20% of the fat-soluble vitamins are extracted into the oil phase. For this purpose, it may be preferable that the oil content is between 2 and 90% by weight, the solid content is between 2 and 99%, preferably between 2 and 40% by weight and/or the water content is between 1 to 97% by weight, further preferably 20 to 97% by weight each based on the total weight of the mash. In embodiments, wherein the water, oil and solid contents of the natural product itself fall into the above-defined content ranges, and the natural product is an animal product, the separate addition of an extraction agent is not absolutely necessary as the natural product itself may provide the extraction agent.

In a preferred embodiment, the natural product is a food product.

The animal products which may be used as the natural product and/or the extraction agent are not specifically limited and may be suitably selected by the skilled artisan depending on the desired valuable components to be extracted (i.e. vitamin, polyphenol, aroma, etc.). In a preferred embodiment, however, the animal product has a fat content of at least 0.3% by weight.

Suitable animal products useful as food product include, but are not limited to raw or refined meat (including, but not limited to beef, pork, poultry, and lamb meat), fish, crustaceans (including, but not limited to lobsters, shrimps, and crabs), animal organs, solid dairy products (e.g. butter) and combinations thereof. The wording "refining", as used herein, denotes a process including simmering, smoking, cooking, grilling, frying and baking. The aroma flavor characteristics of refined meat or fish are mainly derived from volatile flavor components formed during heat-induced reactions occurring during heating via Maillard reactions of amino acids or peptides with reducing sugars, lipid oxidation, and the interaction between Maillard reaction products with lipid-oxidized products. Therefore, it may be preferable that the food product is refined meat (e.g. bacon) or fish when extraction of such complex grill and roast flavors is preferred. In contrast, if high extraction yields of heat sensitive substances (e.g. vitamins) are desired, it may be preferred that the natural product is provided under ambient or cooled conditions, further preferably in a fresh state. In this case, the valuable substances of the natural product are accordingly not reduced owing to storage and preservation, and the quality thereof is not impaired, but instead they are extracted into the oil and water phases in an extremely short time. The additional logistical complexity is justified by the high quality of the extracts which is obtained from the oil phase or the water phase. Advantageously, the method of the present invention also allows to simultaneously achieve the objectives of optimized extraction of both heat-sensitive valuable components and grill/roast flavors, since upon three-phase separation, the solid phase may be subjected to thermal processing (e.g. roasting) without reducing the content of heat-sensitive hydro- and lipophilic components, as these are present in the water and oil phases.

In general, it is understood that if the animal product is used as the natural product, the liquid used as extraction agent is not particularly limited and may comprise animal oil (e.g. fish oil), liquid dairy products, vegetable oil (e.g., olive, soybean, rapeseed, canola, sunflower, safflower, peanut, cottonseed, coconut, palm, avocado and rice bran oil), water-based extraction agents (including potable water, salt solutions (e.g. saline), sugar solutions and acids to modify the pH value) and combinations thereof. Also, further components may be added to the extraction agent to provide desirable flavors (e.g. chili-, garlic- or cardamom infused oils).

The use of concentrated sugar solutions (preferably having a concentration of from 40 to 65 % (w/w), further preferably from 50 to 65 % (w/w)) and/or salt solutions (preferably having a concentration of from 10 to 30 % (w/w), further preferably from 15 to 25 % (w/w)), either alone or in combination with an extraction oil, may promote inactivation of microorganisms by osmosis of water through the microorganism cell membranes and enzymatic inactivation.

If an animal or vegetable oil is used as extraction agent, it is preferred that the oil has predominantly long-chain fatty acids so that an undesirable rancidification is prevented.

In a preferred embodiment of the invention, supplements can be added directly to the natural product or to the extraction agent, for example substances including antioxidants (e.g. vitamin C), such as sea buckthorn or acerola, which may likewise prevent rancidification. Other suitable additives include acetic acid (e.g. in vinegar), oxalic acid (contained in e.g. rhubarb juice) or tocopherol. For example, the addition of oxaloacetic acid and acetic acid causes formation of oxaloacetic acid which promotes inhibition of enzymes in the mash. Excess contents of oxaloacetic acids may then be removed (i.e. precipitated) by addition of calcium ions.

Suitable animal products useful as extraction agents include, but are not limited to animal oils (e.g. oils rendered from animal tissue fats, fish oil) and preferably liquid dairy products, which include, but are not limited to milk, whey, buttermilk, condensed milk, fermented milk products (e.g. kefir, kumis), milk serum and liquefied butter, of which milk, whey and milk serum are particularly preferred.

One or more co-extraction agents may likewise be added to the above-described extraction agents in order to enhance the extraction efficiency. Examples thereof include, but are not limited to organic solvents, such as ethanol.

It is understood that if the animal product is used as the extraction agent, the natural product is not particularly limited and may include herbs, vegetables, fruits and/or solid animal products. In a preferred embodiment, herbs, vegetables and/or fruits are used as raw substances, which are further preferably processed in a state as fresh as possible in order to be able to draw from them as many non-adulterated aromas as possible. This is because, as a result of storage and preservation, plants necessarily lose their fresh and original aroma. The time between the harvest of the plant and the processing should therefore be kept as short as possible.

Therefore, in a preferred embodiment of the present invention, herbs (including, but not limited to basil, parsley, oregano, rosemary, sage, lovage, dill-weed, tarragon, marjoram, thyme, mint, chervil, coriander, sorrel, savory, garlic, chives, onion, and combinations thereof), vegetables, and/or fruits are used as natural product and animal-derived liquid components are used extraction agents, wherein animal-derived oils (e.g. oils rendered from animal tissue fats, fish oil) and liquid dairy products are particularly preferred. For the preparation of cosmetic products, fragrant plants or parts thereof (including, but not limited to, lavender, rose petals, orange blossoms, marigold, jasmine blossoms, etc.) may be used as natural products, whereas for healthcare applications, medicinal herbs may be employed in combination with the above-mentioned animal-derived extraction agents.

By suitably combining the extraction agents and the natural products as set out above, complex oil-based extracts with unique and innovative taste profiles and/or high contents of nutritionally valuable and/or biologically active components may be provided.

In embodiments, it is also conceivable to use dried natural products as initial substances, as the reduction of the microorganisms as a result of extremely fine grinding is also successful in the case of dried initial substances.

In any case, it may be necessary to add water and/or higher volumes of extraction agent in order to improve the processability in the further steps (e.g. facilitated pumping, grinding and/or easier phase separation).

It is noted that the terms "solid" and "liquid", as used in context of the description of animal products and extraction agents, denotes the physical state of matter under the processing conditions.

In this regard, it is preferable that method steps a) to c) are carried out at temperatures below 80°C, preferably below 50°C, especially preferably below 40°C. In some embodiments, the required minimum processing temperature is adjusted so as to ensure that the oil phase remains in the liquid state.

The grinding step c) which results in an oil phase having a mean particle size of less than 300 µm, preferably less than 100 µm and particularly preferably less than 20 µm leads to a surprising reduction of the germs or microorganisms which are in the raw substance. Accordingly, only contents with the above-defined particle size distribution can change into the oil phase because no larger particles are present in the finely ground mash. Therefore, the mean particle sizes set out in the oil phase provide information as to whether the processing was carried out correctly. In the case of insufficient comminution, the number of germs is reduced only to an insufficient degree because a sufficiently large shearing stress does not act on the germs. A sufficient comminution is also significant in order to obtain efficient extraction of the valuable substances, such as aromatic substances and vitamins, from the oil phase. Specifically, it has been shown that the yield of lipophilic vitamins (e.g. vitamin K) may be surprisingly increased when the mash is fine ground so that the average particle diameter in the oil phase is less than 300 µm.

In the context of this patent application, the mean particle size is defined in that all the particle sizes accordingly contribute to the volume proportion thereof collectively. The mean particle size in the range is weighted with the corresponding volume proportion and is arithmetically averaged over all those weighted values.

In a preferred embodiment, the grinding step c) is carried out at a temperature lower or equal to ambient temperature (i.e. 25°C) and/or wherein during grinding the temperature increases by 5 to 20°C or by 5 to 10°C. Accordingly, aromatic substances, polyphenols and vitamins are processed in a protective manner at those low temperatures and can be extracted in high concentrations into the oil and water phases. Surprisingly, tests have also shown that an extremely fine grinding with oily extraction agents at elevated temperatures (e.g. at 80°C) often does not result in an additional reduction of the germs present in the raw material, in comparison with processing at ambient temperature.

It has been found to be advantageous if the grinding step c) comprises the use of a toothed colloid mill whose grinding gap is smaller than 0.1 mm. The selection of this type of mill and the small mill gap lead to a reliable extremely fine grinding which ensures the reduction of the germs in the oil phase. It will be understood that the size of the grinding gap should be adapted to the respective natural product to be comminuted. The grinding step c) may be preferably carried multiple steps (e.g. in two or three steps) in order not to overload the individual cutters and/or mills. In this case, it is preferable that the grinding step c) comprises a coarse grinding step, which may be carried out in a perforated-disc mill (e.g. resulting in an average particle size of 500 µm or less) and a fine grinding step, which may be carried out in a toothed colloid mill (e.g. resulting in an average particle size of 300 µm or less). The perforated-disc mill allows pre-comminution of the initial substances whereas the fine grinding necessary for the reduction of the numbers of germs is carried out in the toothed colloid mill. Specifically, it has been found that the surface enlargement caused by fine grinding promotes the contact with plant-born microbicidal substances (e.g. phytoalexins, polyphenols), which promotes germ reduction. In order to obtain even finer grinding of the mash, a third grinding step may be provided, wherein a ball mill is preferably used in the third grinding step. As a result of the three steps, a comminution can be obtained up to a mean particle size of 20 µm in the oil phase. A corundum disc mill can also be used in place of the toothed colloid mill. While in principle any mill suitable to grind the mash to the desired particle size may be used, it has been found that the use of mills operating by use of vibration, oscillation and/or rotation at ultrasonic frequencies (such as e.g. a tooth colloid mill) advantageously affects the extraction efficiency, homogenization and/or germ reduction, presumably due to sonochemically induced reaction dynamics. The use of such mills in least one grinding (sub-)step is therefore preferable.

The intermediate product which leaves the extremely fine grinding operation is referred to as mash.

In step d), the mash is separated in a three-phase separator into a solid phase, an oil phase and a water phase. Due to the extremely fine grinding, the mash can be separated into three phases although the formation of an emulsion may be expected.

In a preferred embodiment of the method according to the invention, there are produced from the mash by the extremely fine grinding an oil phase, in which the fat-soluble contents, such as aromatic substances and vitamins, are extracted, a water phase, in which germs and other water-soluble substances accumulate, and a solid phase, in which the solid residues remain. The formation of the water phase allows, in addition to the extremely fine grinding, another reduction of the germs in the oil phase. Since, in the prepared oil phase, neither water nor oxygen is present, the small number of germs present in the oil phase also constitute no danger in the case of relatively long storage of the end product. Accordingly, the reduction of the germs in the oil phase is therefore ensured by two steps, on the one hand, by the extremely fine grinding and, on the other hand, by the separation of the water phase.

Preferably, the three-phase separation is carried out continuously in a single step using a three-phase decanter centrifuge, which allows the finely ground mash to be processed quickly and continuously and further minimizes the growth of germs. On the other hand, it has been shown that separating the mash into two phases first (by a two-phase decanter centrifuge, for example) is not only inferior in terms of separation efficiency, but that the high contents of water in the oil phase also promote growth of germs, which results in undesirably rapid spoilage of the final oil-based extract.

The three phases obtained in step d) may be optionally further processed independently. For example, multiple phase separation and recombination steps may be employed to achieve an improved separation between the water phase, the oil phase and the solid phase. For example, the water and oil phases obtained in the three-phase separation may be further purified, e.g. by performing a second three-phase separation step, in order to further improve the recovery and yield of extracts. The solid phase may filtered or centrifuged to separate remaining water, which may be recombined with the water phase from the initial decanting step or at a later processing stage of said phases. Also, the water phase may be subjected to further purification steps, e.g. by membrane processes or filtration using vacuum rotation filters in order to remove fine particles.

The oil phase may be separated in a pressure reduction de-aerator (under controlled heat impact and vacuum conditions) from water residues and water-soluble volatile components and water-soluble aromatic substances. The separated aromatic phase can be used, after additional preparation, for example, as a result of distillation or membrane methods, for aromatising other products. It has been found to be advantageous if the oil phase is dewatered as a result of reduced pressure de-aeration. In order to stabilize the small number of germs or microorganisms present in the oil phase, it is desirable to keep the water content in the oil phase as low as possible. The basis for life is thereby removed from the germs present in the oil phase.

In embodiments, the oil phase may be subjected to tyndallization to inactivate germs. Alternatively or in addition, the oil phase may be subjected to a temperature processing operation and a subsequent cooling. For instance, the oil phase may be quickly heated in a rapid and protective manner to a temperature of 40°C to 150°C, preferably 80°C to 100°C by using a heat exchanger, for example.

It is preferable if the oil phase is purged of sediments and suspended matter in a two-phase separator (e.g. a centrifuge). It is thereby possible to produce a clear oil-based extract, and colloids which are formed during a thermal processing operation can be separated.

In the oil phase, the fat-soluble contents of the raw substance accumulate. Aromatic substances, vitamins (e.g. vitamins A, D, E and K) and other lipophilic physiologically active components, if present in the raw substance, are particularly highly concentrated in the end product available from the oil phase. Therefore, the end product may be also referred to as an essential oil.

The obtained oil-based extract is microbiologically harmless and storable, without requiring additive substances for preservation.

The water phase may be subjected to a concentration/aroma recovery step, wherein hydrophilic aroma components and nutritionally or physiologically beneficial components (including vitamins B₁, B₂, B₆, B₁₂, folate, niacin, biotin) are separated from the water phase. Suitable techniques include, but are not limited to vacuum evaporation, absorption, reverse osmosis techniques or extraction with solvents (e.g. ethanol). In general, the water phase may also be subjected to pasteurization or sterilization prior to or after the concentration/aroma recovery step. If salts and/or sugars have been added as additives during or before steps b) or c), they are present in a dissolved form in the water phase and crystallize if subjecting the water phase to drying. Thus, it is possible to prepare essence salts or essence sugars that are enriched with nutritionally and/or physiologically beneficial components.

As indicated in Fig. 1, nutritionally beneficial components (polyphenols, vitamins etc.) and aroma fractions recovered from the processing of the solid and water phases may be recombined with the oil extract in order to provide innovative oil-based extracts with unique taste profiles, high contents of nutritionally and/or physiologically valuable components and long storage stability.

The oil-based extracts according to one aspect of the present invention, which have been prepared by the method described above, preferably have a mean particle size of less than 300 µm, further preferably less than 100 µm and particularly preferably less than 20 µm.

Especially if hydrophilic components obtained with the process of the present invention are recombined with the oil phase, it is desirable to keep the water content in the oil phase low in order to enable the extract to be stored for a long time. In this respect, it is generally preferable that the oil-based extract has a water content of less than 2 vol.-%, further preferably less than 1 vol.-%, especially preferably less than 0.5 vol.-% based on the total volume of the oil-based extract. In cases where the oil phase solidifies at ambient temperatures, the water content may be higher than the above ranges, which results in lower microbial stability and may hence require storage under cooled conditions before further processing or as the final oil-based product.

The final product, i.e. the oil-based extract may be filled and packaged by methods known in the art (e.g. bag in box-packaging) which preferably avoid excessive contact with air oxygen so as to maintain high storage stability.

While not being limited thereto, the oil-based extract according to the present invention may be used for incorporation into food, food supplements, cosmetic products (e.g. in perfumes, lotions), health-care products (including natural health-care products), and combinations of the latter (topical preparations, massage oils, etc.).

For example, by suitably combining the oil-based extracts (and optionally also the essence salts or sugars) and/or incorporating the same in the preparation of food, a large variety of innovative food creations with unique taste profiles and favourable contents of healthy ingredients may be provided. For example, oil-based bacon extracts may be used for the preparation of bacon-infused mayonnaise, milk extracts of herb combinations such as garlic, mint and dill may be used for the preparation of herb butter, or vegetable oil extracts of fish or seafood may be used as additive for cooking or in salads (e.g. to provide an alternative to fish oil, which is usually not palatable in these applications).

It will be appreciated that the preferred features specified above with respect to the description of the methods and the obtained products may be combined in any combination, except for combinations where at least some of the features are mutually exclusive.

Once given the above disclosure, many other features, modifications, and improvements will become apparent to the skilled artisan.

## Claims

1. Method for obtaining extracts from natural products, comprising the steps of:
a) providing a natural product comprising water, lipids and solids,
b) adding an extraction agent,
c) grinding the natural product and the extraction agent to form a mash, and
d) subjecting the mash to a three-phase separation resulting in an oil phase, a water phase and a solid phase as a refined phase;
wherein in the grinding step, the natural product and the extraction agent are ground until the mash has a mean particle size of less than 300 µm, preferably less than 100 µm and particularly preferably less than 20 µm; and
wherein at least one of the natural product and the extraction agent comprises an animal product.

2. Method according to claim 1, wherein the natural product is a food product.

3. Method according to claim 1 or claim 2, wherein the three-phase separation is carried out continuously in a single step using a three-phase decanter centrifuge.

4. Method according to any of claims 1 to 3, wherein the animal product has a fat content of at least 0.3% by weight.

5. Method according to any of claims 1 to 4, wherein the natural product is an animal product selected from the group of raw or refined meat and raw or refined fishand/or wherein the extraction agent is an animal product selected from animal oil and/or a liquid dairy product, preferably milk, whey, or milk serum.

6. Method according to any of claims 1 to 5, **characterized in that** the three-phase separation is performed so as to yield an oil phase, in which the fat-soluble contents, such as aromatic substances, vitamins and polyphenols, are extracted, a water phase, in which germs and other water-soluble substances accumulate, and a solid phase, in which the solid residues remain; wherein, as a result of the formation and separation of the water phase, the number of germs in the oil phase is reduced.

7. Method according to any one of claims 1 to 6, **characterised in that** the grinding step comprises a coarse grinding step, preferably in a perforated-disc mill, to an average particle size of 500 µm or less and a fine grinding step to an average particle size of 100 µm or less and particularly preferably less than 20 µm, preferably in a toothed colloid mill.

8. Method according to any one of claims 1 to 7, wherein in the mash, the oil content is between 2 and 80% by weight, the solid content is between 2 and 30% by weight and/or the water content is between 20 to 80% by weight, each based on the total weight of the mash.

9. Method according to any one of claims 1 to 8, wherein the extraction agent comprises additives selected from sugar, salt and/or antioxidants.

10. Method according to any one of claims 1 to 9, **characterized in that** the grinding step is carried out at a temperature lower or equal to ambient temperature and/or wherein during grinding the temperature increases by 5 to 20°C or by 5 to 10°C.

11. Method according to any one of claims 1 to 10, **characterized in that** the oil phase is dewatered as a result of reduced pressure de-aeration, and/or **in that** the oil phase is purged of sediments and suspended matter in a two-phase separator.

12. Method according to any one of claims 1 to 11, **characterized in that** the oil phase is subjected to a thermal processing operation and a subsequent cooling.

13. Method according to any one of claims 1 to 12, **characterized in that** the grinding step effects a reduction of the number of germs or a microbiological stabilization.

14. Oil-based extract obtainable by a method according to any of claims 1 to 13, preferably having a mean particle size of less than 300 µm, preferably less than 100 µm and particularly preferably less than 20 µm.

15. Use of an oil-based extract according to claim 14 in the preparation of food, food supplements, cosmetic products, health-care products and combinations thereof.
